Europäisches Patentamt

European Patent Office

Office européen des brevets

(11) Publication number: **0 027 369**
**A1**

(19)

(12) **EUROPEAN PATENT APPLICATION**

(21) Application number: **80303584.9**

(22) Date of filing: **10.10.80**

(51) Int. Cl.³: **C 01 B 17/66**

(30) Priority: **12.10.79 US 84248**

(43) Date of publication of application:
**22.04.81 Bulletin 81/16**

(84) Designated Contracting States:
**AT BE CH DE FR GB IT LI NL SE**

(71) Applicant: **THIOKOL CORPORATION**
**P.O. Box 1000**
**Newtown Pennsylvania 18940(US)**

(72) Inventor: **Guess, Robert G.**
**31 Atlantic Avenue**
**Beverly Massachusetts(US)**

(74) Representative: **Hose, Cyril Gustav Bidwell et al,**
**Baron & Warren 16 Kensington Square**
**London W8 5HL(GB)**

(54) Stable precursor solution for the generation of hydrosulfite and use thereof in bleaching wood pulp, brightening kaolin clay and reducing vat dyestuffs to their leuco form.

(57) Substantially stable aqueous solutions comprise sulfite ions and borohydride ions in a molar ratio of sulfite ions to borohydride ions of at least 6.0 to 1 and contain sufficient hydroxyl ion to give a pH greater than 8. Such solutions have excellent long term storage stability. By reducing the pH to below 8 aqueous hydrosulfite solutions may be generated therefrom and these may be used in bleaching wood pulp, in brightening kaolin clay and in the reduction of vat dyestuffs to their leuco form, either in suspension or in contact with textile materials.

EP 0 027 369 A1

– 1 –

STABLE PRECURSOR SOLUTION FOR THE GENERATION
OF HYDROSULFITE AND USE THEREOF IN BLEACHING
WOOD PULP, BRIGHTENING KAOLIN CLAY AND
REDUCING VAT DYESTUFFS TO THEIR LEUCO FORM

Because hydrosulfite solutions in water are unstable, for many years users have commonly prepared these solutions by dissolving a solid hydrosulfite salt in water just prior to use. Even when freshly prepared however, a few minutes after solution only 80% of the original hydrosulfite can be detected in the solution. In addition, powdered sodium hydrosulfite ($Na_2S_2O_4$) frequently ignites spontaneously upon addition of water. Contact of the solution with air leads to a rapid loss of strength due to reaction with oxygen. The rate depends upon the contact surface area.

Because of the handling and solution difficulties encountered with solid hydrosulfite, an all liquid system has been desired by users. For medium to large users, who can afford the nominal capital investment, a system of generating highly stable hydrosulfite solutions using commercially available alkaline sodium borohydride water solutions for reducing sodium bisulfite ($NaHSO_3$) in solution has proved extremely attractive.

Other users have turned to the purchase of hydrosulfite solutions from hydrosulfite suppliers. The prepared hydrosulfite solutions must be used fresh and constantly be replenished. An unscheduled shutdown of an operation, for example, may result in the hydrosulfite solution scheduled and held for that period decomposing and therefore being useless when production is resumed.

An interruption in supply can also cause problems for the user who cannot stockpile reserve solution because of its instability.

Storage stable solutions easily preparable by either the user or the supplier involving low capital investment, have not been previously described.

U. S. Patent No. 3,167,515 describes solid mixtures of alkali metal borohydrides and alkali metal bisulfites or metabisulfites which may be dissolved in water at pH values greater than 10 to give hydrosulfite solutions having initial high strength. The metabisulfite or bisulfite to borohydride ratios are low and no mention of any solution storage stability is made.

We are not aware of other material prior art.

The invention provides a substantially stable aqueous solution comprising sulfite ions and borohydride ions in a mole ratio of sulfite ions to borohydride ions of at least 6 to 1 and containing sufficient hydroxyl ion to provide a pH greater than 8.0.

Such aqueous solutions having superior storage stability when compared under similar temperature, concentration, and air exposure conditions, with aqueous hydrosulfite solutions; and, when added to aqueous solutions or slurries having sufficient acid capacity to produce resulting mixtures having a pH of less than 8.0, of being converted to solutions or slurries having significant concentrations of hydrosulfite ions. These solutions and slurries have been found to be useful for bleaching paper pulp, particularly thermomechanical and ground wood pulp, in leaching kaolin clays and in the vat dyeing of textile materials.

Preferred aqueous solutions are those wherein the cation counter ion to the borohydride ion and the sulfite ion is an alkali metal cation, $Mg^{++}$, $NH_4^+$, or a mixture thereof. Special mention is made of those solutions wherein the cation is $Na^+$.

The stable solutions of this invention contain sulfite ions and borohydride ions but do not contain hydrosulfite ions. The latter are formed immediately prior to use by reducing the pH of the solution containing sulfite ions and borohydride ions to below 8. The reduction in pH leads to formation of bisulfite ions in the solution and these are then reduced by the borohydride to hydrosulfite ions.

This invention also provides a process for the generation in substantially aqueous solution of hydrosulfite ions which comprises adjusting the pH of the borohydride-sulfite solutions of the invention to less than 8.0.

In a preferred embodiment of this process the sulfite-borohydride containing solutions are added to a substantially aqueous solution or slurry containing sufficient acid for the final mixture to have a pH of less than 8.0.

The invention also includes processes for bleaching mechanical wood pulp, brightening kaolin clay and reducing a vat dye to the leuco form thereof which comprise adding an effective amount of the sulfite-borohydride solution of this invention to an aqueous suspension of said wood pulp, of said clay, or of said vat dye or to an aqueous immersion of a textile material on which the normal form of said vat dye has been deposited, the acidity of the aqueous mixture so formed being controlled so as to give a final pH value of less than 8.0.

The manner of preparing and using the aqueous solutions of this invention will now be described with reference to a preferred embodiment thereof so as to enable those skilled in the art to practice the same:

The sulfite-borohydride solutions of the invention may be prepared either from a solid borohydride salt in water containing, if desired, sufficient hydroxide base to stabilize the borohydride ion by retarding its hydrolysis.

The borohydride salt may be dissolved in water together with sufficient hydroxide base to ensure that the final pH value after preparation of the solution of the invention, is greater than 8.0. If a previously prepared borohydride solution does not contain sufficient hydroxide base to ensure that the required final pH is attained an additional quantity should be added thereto.

To the borohydride solution may then be added a desired sulfite, or bisulfite, in solid or in aqueous solution, aqueous sulfurous acid or gaseous or liquid sulfur dioxide until the desired mole ratio of greater than 6 to 1 of sulfite ions to borohydride ions is attained. The ratio of sulfite ions to borohydride ions is conveniently 7:1 to 9:1, preferably 8.0:1.

If desired, the solution so prepared may be added to a water solution of a non-borohydride reducible acid containing a sufficient quantity of said acid to ensure that the solution resulting from such addition will have a final pH of less than 8.0., thereby generating hydrosulfite ion in said final solution.

The hydrosulfite solution so generated may then be employed in conventional hydrosulfite bleaching procedures for the treatment of groundwood or thermomechanical paper pulps, clay leaching or the vat dyeing of textile materials.

If desired, the sulfite-borohydride solution may be added directly to the pulp, clay or textile dyeing solution or suspension in which it is desired to have hydrosulfite ion present. One may rely on the inherent acidity of such solutions or suspensions, or one may add additional acid, previously, simultaneously and/or subsequently, to provide a final pH of below 8.0.

These skilled in the art will recognize that in selecting an appropriate borohydride and, if desired, a sulfite salt as well as hydroxide bases for the preparation of the sulfite-borohydride solution, the particular cation or cations introduced are not particularly critical and may largely be chosen at the option of the operator based on price, commercial availability, solubility and the desirability of its presence in subsequent processing. The techniques of conversion of a particular salt or base from one cationic form to another are well known.

Conventional cation exchange techniques employing commercially available ion exchange resins may be employed, for example. Because of their solubility, low price and availability compounds using alkali metals such as potassium or sodium, particularly sodium, are preferred.

The terms acid, base and acid capacity have the usual meanings of those terms in relation to aqueous or substantially aqueous solution. Normally an acid is a proton donor, a base a proton acceptor and a hydroxide base, a base which on solution in water generates an excess of hydroxyl ions which are proton acceptors. It is understood that a proton is conventionally thought of in aqueous solution as solvated with one molecule of water. Acid capacity means having sufficient protons or their equivalent to neutralize a desired amount of base so that a desired pH level will be attained. Typical acids which are not reducible by borohydride ion are the hydrohalide acids such as hydrogen chloride, hydrogen fluoride and hydrogen bromide; mineral acids such as $H_2SO_4$, $H_3PO_4$, $H_2SiO_4$ and more complex silicic acids and $H_3BO_3$, as well as organic carboxylic, dicarboxylic, and substituted amine carboxylic acids.

Hydroxide bases employed in ensuring that the initially prepared sulfite-borohydride solutions will have pH values greater than 8 may be any readily water soluble hydroxide such as the alkali metal hydroxides, calcium hydroxide, magnesium hydroxide and ammonium hydroxide. Sodium hydroxide is preferred.

When less soluble cations are present and/or for solution stability at higher concentration levels various chelating and/or complexing agents such as ethylene diamine tetraacetic acid and its salts may be employed.

It will be understood that the exact concentration of borohydride, sulfite or hydroxyl ions in aqueous solution up to the limits of solubility is not particularly critical so long as the pH of the storage stable solution is greater than 8.0 and the relative proportion of 6.0 moles or more of sulfite ion for each mole of borohydride ion is maintained. For example with sodium ion as the anion the solution may contain from about 0.1 to about 2.0 weight % of $NaBH_4$, from about 10.0 to about 30.0 weight % of $Na_2SO_3$ and from about 1.0 to about 6.0 weight % of $NaOH$.

The following examples further illustrate the best method known to us for performing this invention.

## EXAMPLE 1

### TYPICAL RELATIVE CONCENTRATION AND SOLUBILITY PARAMETERS

### FOR $NaBH_4$, $Na_2SO_3$ and NaOH

The maximum obtainable concentrations in water, limited by solubilities at various temperatures are determined, maintaining 8 moles of $Na_2SO_3$: 1 mole of $NaBH_4$ and 3.2 moles of NaOH: 1 mole of $NaBH_4$ ratios.

| Temp. ($^{\circ}$C) | Concentrations, Percents by Weight in Solution | | | | | |
|---|---|---|---|---|---|---|
| Ingredient | $0^{\circ}$ | $10.1^{\circ}$ | $16^{\circ}$ | $25^{\circ}$ | $29.5^{\circ}$ | $38.9^{\circ}$ |
| $Na_2SO_3$ | 11.7 | 15.6 | 19.2 | 23.5 | 25.9 | 26.3 |
| $NaBH_4$ | 0.439 | 0.586 | 0.721 | 0.882 | 0.973 | 0.987 |
| NaOH | 1.48 | 1.98 | 2.44 | 2.98 | 3.29 | 3.34 |

-8-

## EXAMPLE 2

### CHEMICAL STABILITY OF SULFITE/BOROHYDRIDE SOLUTIONS

Solutions of 3.2 moles $NaOH$, 1 mole $NaBH_4$ and 8 moles $Na_2SO_3$ ratio, containing 0.74 weight % $NaBH_4$ are stored at temperatures between 21.1° and 26.7°C and at 37.8°C. Residual borohydride at the times indicated is determined by direct analysis where indicated or by measurement of hydrogen evolved.

| Temp. (°C) | Percent of Original $NaBH_4$ Remaining After Storage (Days) | | | | | |
|---|---|---|---|---|---|---|
| | 8 | 23 | 35 | 60 | 64 | 120 |
| 21.1 - 26.7° | 98.4 | 92.9 | -- | -- | -- | -- |
| " | -- | -- | 94.2 | -- | -- | -- |
| " | -- | -- | -- | 92.0 | -- | -- |
| " | -- | -- | -- | -- | 92.2 | -- |
| " | -- | -- | -- | -- | -- | 85.5 |
| " | -- | -- | -- | -- | -- | 83.8* |
| 37.8° | 91.1 | -- | -- | -- | -- | -- |
| " | -- | -- | 66.5 | | | |
| " | -- | -- | -- | 59.0 | -- | -- |
| " | -- | -- | -- | -- | 51.8 | -- |
| " | -- | -- | -- | -- | -- | 47.8 |
| " | -- | -- | -- | -- | -- | 47.3* |

*=direct analysis

That these solutions may be stored for extended periods of time and still be employed for generation of solutions with good hydrosulfite concentrations is thus evident.

- 9 -

EXAMPLE 3 (COMPARATIVE)

COMPARATIVE STABILITY OF A CONVENTIONAL SODIUM HYDROSULFITE SOLUTION

Sodium hydrosulfite solution prepared in a conventional manner and having an initial concentration of 10 % by weight of $Na_2S_2O_4$ and adjusted to a pH of about 10, are stored under anaerobic conditions at the temperatures indicated. The percentage of the original $Na_2S_2O_4$ remaining in solution at the times indicated is determined by standard iodine titration.

Percent of Original $Na_2S_2O_4$ Remaining After Storage

| Time(Days) | 2 | 3 | 4 | 7 | 10 | 14 | 15 | 16 |
|---|---|---|---|---|---|---|---|---|
| Temp. ($^{O}$C) | | | | | | | | |
| 21.1$^{O}$ | -- | -- | -- | -- | 89.6 | -- | 62.8 | 41.6 |
| 32.8$^{O}$ | 93.1 | 84.8 | 63.7 | -- | -- | -- | -- | -- |

That these solutions are significantly less storage stable than the solutions of Example 2 is readily apparent.

-10-

EXAMPLE 4

EXAMINATION OF SEVERAL METHODS OF ACIDIFYING HIGH PH

$Na_2SO_3$ + $NaBH_4$ SOLUTIONS

A solution containing by weight 19.2% of $Na_2SO_3$, 0.72% of $NaBH_4$ and 2.4% of NaOH in water is divided into portions, some of which are diluted. Each is then treated with various acids in water. The compounds, the method of treatment and the results obtained are tabulated below.

TABLE 4-1

Dropwise Addition of Acid to Chilled $Na_2SO_3$ · $NaBH_4$ Solution

| Acid | Max. Temp | Final pH | Liters Gas Generated | Actual % $Na_2S_2O_4$ | Yield % |
|------|-----------|----------|---------------------|----------------------|---------|
| ($H_2SO_3$) | 22°C | 7.03 | 3.0 | 5.23 | 66.0 |
| ($H_2SO_3$) | 13°C | 7.00 | 1.4 | 1.39 | 68.8 |
| 6N $H_2SO_4$ | 15°C | 7.00 | 1.90 | 6.08* | 62.6* |
| 6N $H_2SO_4$ | 20°C | 6.99 | 2.3 | 5.90 | 61.1 |
| 3N $H_2SO_4$ | 21°C | 7.05 | 3.45 | 5.43 | 77.4 |
| 3N $H_2SO_4$ | 9°C | 7.04 | 2.5 | 5.23 | 64.7 |
| 3N $H_2SO_4$ | 23°C | 7.10 | 1.95 | 5.12 | 64.4 |
| 3N $H_2SO_4$ | 9°C | 7.00 | 2.2 | 1.45 | 70.4 |
| 3N $H_2SO_4$ | 8°C | 7.00 | 1.2 | 1.45 | 71.2 |
| 1N $H_2SO_4$ | 22°C | 7.86 | 2.1 | 3.12 | 71.2 |

*Not corrected for Thiosulfate generated.

-11-

EXAMPLE 4 (Continued)

TABLE 4-2

Rapid Addition of $Na_2SO_3$ $NaBH_4$ Solution to Chilled Acid

| Acid | Max. Temp. | Final pH | % Hydrosulfite | Yield (%) |
|---|---|---|---|---|
| 1N $H_2SO_4$ | 24°C | 7.0 | 3.16 | 76.7 |
| 1N $H_2SO_4$ | 21°C | 7.7 | 1.54 | 76.9 |
| 1N $H_2SO_4$ | 21°C | 6.9 | 1.56 | 77.9 |
| ($H_2SO_3$) | 18°C | 7.11 | 1.53 | 84.4 |
| ($H_2SO_3$) | 17°C | 7.5 | 1.42 | 79.5 |
| 1N $H_2SO_4$ | 20°C | 6.3 | 1.62 | 81.1 |
| 1N $H_2SO_4$ | 20°C | 6.13 | 1.55 | 77.5 |
| ($H_2SO_3$) | 20°C | 6.6 | 1.78 | 89.2 |

TABLE 4-3

Simultaneous Addition of Acid and $Na_2SO_3$ $NaBH_4$ Solutions

| Acid | Max. Temp. | Final pH | % Hydrosulfite | Yield (%) |
|---|---|---|---|---|
| 1N $H_2SO_4$ | 24°C | 7.4 | 3.05 | 70.9 |
| 1N $H_2SO_4$ | 27°C | 7.9 | 3.80 | 88.4 |
| 1N $H_2SO_4$ | 25°C | 7.87 | 3.41 | 79.2 |
| 1N $H_2SO_4$ | 15°C | 6.79 | 1.46 | 79.5 |
| 1N $H_2SO_4$ | 18°C | 6.67 | 1.57 | 78.7 |

Hydrosulfite concentration is determined by standard iodine titration.

Yield % is determined by material balance of actual sodium hydrosulfite produced in the experiment in ratio to the theoretical amount possible, if each gram of $NaBH_4$ produced 18.4 grams of $Na_2S_2O_4$.

The above series of experiments show that the sequence of adding the chemicals is not critical, but may tend to favor the latter two of the three procedures tested.

EXAMPLE 5

A solution containing 0.74 weight % $NaBH_4$ and made up in the ratio of 3.3 moles NaOH, 1 mole $NaBH_4$ and 8 moles $Na_2SO_3$ is added to dilute sulfuric acid solutions with a view to obtaining a final pH of about 6.5. Results obtained are tabulated, with yield based upon $NaBH_4$ to produce $Na_2S_2O_4$ in theoretical quantity of 18.4:1 by weight.

| Sample | Final pH | $Na_2S_2O_4$ Theoretical Conc. (Wt.%) | $Na_2S_2O_4$ Actual Conc. (Wt.%) | Yield % |
|--------|----------|----------------------------------------|-----------------------------------|---------|
| A | 6.9 | 2.0 | 1.53 | 79.4 |
| B | 6.7 | 2.0 | 1.58 | 78.9 |
| C | 6.31 | 2.11 | 1.67 | 78.9 |
| D | 6.23 | 2.11 | 1.63 | 77.8 |

-13-

## EXAMPLE 6

Western North American stone ground wood (unbleached brightness as received 52.6) is bleached using hydrosulfite (BGH) generated in the normal manner from commercial Borohydride solution and sodium bisulfite, and by hydrosulfite produced by acidifying the alkaline $NaBH_4$, $Na_2SO_3$ solutions of the present invention, both with and without 5 pound per ton sodium tripolyphosphate (STPP). Brightness is measured using TAPPI. standard T217 OS-48 using magnesium oxide as a standard of whiteness. Bleached brightness is determined on a handsheet allowed to dry/12 hours at ambient temperature. Results are tabulated.

TABLE 6-1

BHG - No STPP

| Hydrosulfite (lb/Ton) | Bleached Brightness | Brightness Increase |
|---|---|---|
| 5 | 56.7 | 4.1 |
| 10 | 59.2 | 6.6 |
| 15 | 60.1 | 7.5 |
| 20 | 60.0 | 7.4 |
| 25 | 60.0 | 7.4 |

TABLE 6-2

Hydrosulfite from Subject Solution of $NaBH_4 \cdot Na_2SO_3$ - No STPP

| Hydrosulfite (lb/Ton) | Bleached Brightness | Brightness Increase |
|---|---|---|
| 5 | 56.6 | 4.0 |
| 10 | 59.1 | 6.5 |
| 15 | 60.2 | 7.6 |
| 20 | 59.7 | 7.1 |
| 25 | 60.0 | 7.4 |

-14-

EXAMPLE 6 (continued)

TABLE 6-3

BGH + 5 lb/Ton STPP

| Hydrosulfite (lb/Ton) | Bleached Brightness | Brightness Increase |
|---|---|---|
| 5 | 57.4 | 5.0 |
| 10 | 60.8 | 8.2 |
| 15 | 61.7 | 9.1 |
| 20 | 62.0 | 9.4 |
| 25 | 62.3 | 9.7 |

TABLE 6-4

HYDROSULFITE FROM NaOH · $NaBH_4$ · $Na_2SO_3$ + 5 lb/Ton STPP

| Hydrosulfite (lb/Ton) | Bleached Brightness | Brightness Increase |
|---|---|---|
| 5 | 58.1 | 5.5 |
| 10 | 60.9 | 8.3 |
| 15 | 61.8 | 9.2 |
| 20 | 61.8 | 9.2 |
| 25 | 61.8 | 9.2 |

Within experimental error of about ± 0.5 point of brightness, these tests verify the utility of the present sulfite/borohydride solution for producing a viable and active sodium hydrosulfite solution for purposes of bleaching mechanical pulp. Results indicate comparable brightening potential regardless of hydrosulfite source.

-15-

## EXAMPLE 7

Kaolin clay is treated with hydrosulfite generated in the normal manner from commercial $NaBH_4$ solution and sodium bisulfite and with the solution of the present invention after adjustment of the/pH of clay to ensure a post treatment pH below 7. When equal amounts of hydrosulfite, generated by either technique, were employed for comparison in the experiment, equal clay brightness was obtained.

These experiments thus indicated suitability of the solution of the present invention in place of commercial solutions of sodium hydrosulfite now used for brightening kaolin clay.

-16-

## EXAMPLE 8

A sample of commercial thermomechanical wood pulp (TMP), (Candian Black Spruce), is divided into separate portions and treated with sodium hydrosulfite solutions at the concentrations relative to pulp weight tabulated and with $NaBH_4$ $Na_2SO_3$ solutions of the present invention after pH adjustment of the pulp as tabulated. The solute ratio is 8:1 $Na_2SO_3$ to $NaBH_4$ and the concentration is 0.72 wt.% $NaBH_4$. The wt.% $NaBH_4$ tabulated is the amount contained in the aliquot portion employed relative to pulp weight. Results are tabulated.

| Type of Treatment | | | Pulp pH | | | | |
|---|---|---|---|---|---|---|---|
| Wt.% $Na_2S_2O_4$ | Wt.% $NaBH_4$ | Treatment Temp. | Initial 1) | After Chem. Add. | Final | Brightness | Gain |
| 0 | 0 | 0 | 0 | 0 | 5.0 | 53.5 | Control 0 |
| 0.75 | 0 | 60°C | 5.0 | -- | 5.4 | 63.0 | 7.5 |
| 1.00 | 0 | 60°C | 5.0 | -- | 5.5 | 63.9 | 8.4 |
| 0 | 0 | 0 | 0 | 0 | 5.0 | 55.1 | Control 0 |
| 0 | 0.061 | Ambient | 2.4 | 3.7 | 3.8 | 60.2 | 5.1 |
| 0 | 0.061 | 60°C | 2.4 | 4.1 | 4.0 | 61.3 | 6.2 |
| 0 | 0.009 | 60°C | 4.0 | 5.5 | 5.1 | 56.1 | 1.0 |
| 0 | 0.013 | 60°C | 4.0 | 6.3 | 6.3 | 56.5 | 1.4 |
| 0 | 0.018 | 60°C | 4.0 | 6.8 | 6.7 | 56.9 | 1.8 |
| 0 | 0.026 | 60°C | 4.0 | 7.3 | 7.2 | 57.2 | 2.1 |
| 0 | 0.043 | 60°C | 4.0 | 8.0 | 7.8 | 57.8 | 2.8 |
| 0 | 0.061 | 60°C | 4.0 | 8.4 | 8.1 | 57.8 | 2.8 |
| 0 | 0.061 | 60°C | 3.3 | 7.6 | 7.3 | 58.3 | 3.2 |
| 0 | 0.061 | 60°C | 2.9 | 7.2 | 6.9 | 60.6 | 5.5 |
| 0 | 0.061 | 60°C | 2.8 | 7.0 | 6.7 | 60.2 | 5.2 |
| 0 | 0.061 | 60°C | 2.7 | 6.5 | 6.4 | 60.9 | 5.8 |

1) Initial pulp pH starting at 5.0 is preadjusted by adding sufficient $H_2SO_4$ to produce lower pH values.

The above reported experiments verify that direct application of the sulfite/borohydride solution of the present invention into preconditioned TMP pulp will produce gain in brightness comparable to results obtained with sodium hydrosulfite solution under similar temperature and pH conditions of the pulp.

## C L A I M S

1.      A substantially aqueous stable solution comprising sulfite ion and borohydride ion in a mole ratio of sulfite ions to borohydride ions of at least 6 to 1 and containing sufficient hydroxyl ion to provide a pH greater than 8.0.

2.      A solution as claimed in claim 1 further characterised in that the cation concomitantly introduced with the borohydride and sulfite ions is an alkali metal cation, $Mg^{++}$, $Ca^{++}$, a quaternary ammonium cation or a mixture thereof.

3.      A solution as claimed in claim 2 further characterised in that the alkali metal cation is $Na^{+}$.

4.      A solution as claimed in any of claims 1 to 3 further characterised in that the mole ratio of sulfite ion to borohydride ion is in the range 7.0:1 to 9.0:1.

5.      A solution as claimed in claim 4 further characterised in that the mole ratio of sulfite ion to borohydride ion is 8.0:1.

6.      A process for the generation of hydrosulfite ion in substantially aqueous solution characterised in that it comprises adjusting the pH of the borohydride-sulfite solution claimed in any of claims 1 to 5 to less than 8.0.

7.      A process as claimed in claim 6 wherein the borohydride-sulfite solution is added to a substantially aqueous solution containing sufficient acid to give the resulting solution a pH of less than 8.0.

8.      A process for bleaching mechanical woodpulp which comprises adding an effective amount of a borohydride-sulfite solution, as claimed in any of claims 1 to 5 to an aqueous suspension of said woodpulp, the acidity of the aqueous mixture so formed being controlled to give a pH value of less than 8.0 to the mixture.

9.   .   A process for leaching kaolin clay which comprises adding an effective amount of a borohydride-sulfite solution, as claimed in any of claims 1 to 5, to an aqueous suspension of kaolin clay, the acidity of the aqueous mixture so formed bing controlled to give a pH value of less than 8.0 to the mixture.

10.      A process for the reduction of a vat dye to the leuco form which comprises adding to an aqueous suspension of the vat dyestuff or to an aqueous immersion of a textile material having the normal form of a vat dye deposited thereon an effective amount of borohydride-sulfite solution as claimed in any of claims 1 to 5, to reduce the vat dye to the leuco form, the acidity of the aqueous mixture so formed being controlled so as to give a pH value of less than 8.0 to the mixture.

European Patent
Office

**EUROPEAN SEARCH REPORT**

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | DE - B - 1 228 136 (DEGUSSA) <br> * claims 1, 2, 6; column 1, lines 43 to 48; column 3, lines 35 to 47 * <br> -- | 1,6-8 | C 01 B 17/66 |
| | US - A - 2 991 152 (D. GOERRIG et al.) <br> * claims 1 to 4 * <br> -- | 1 | |
| | US - A - 3 290 161 (F.R. SHELDON et al.) <br> * claims * <br> -- | 8 | |
| D | US - A - 3 167 515 (A.A. HINCKLEY et al.) <br> -- | | TECHNICAL FIELDS SEARCHED (Int.Cl.3) <br><br> C 01 B 17/00 <br> C 04 B 33/00 <br> D 21 C 9/00 |
| A | DE - C - 453 409 (VEREIN FÜR CHEMISCHE UND METALLURGISCHE PRODUKTION) <br> -- | | |
| A | US - A - 3 773 679 (M.A. KISE et al.) <br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| The present search report has been drawn up for all claims | | | |
| Place of search <br> Berlin | Date of completion of the search <br> 07-01-1981 | Examiner <br> KESTEN | |

EPO Form 1503.1  06.78